# EUROPÄISCHE PATENTSCHRIFT

(11) **EP 0 493 394 B1**
(45) Veröffentlichungstag und Bekanntmachung des Hinweises auf die Patenterteilung: **10.01.1996**
(21) Anmeldenummer: 90911913.3
(22) Anmeldetag: 23.07.1990
(51) Int. Cl.: H02M 3/158

(54) **SCHALTUNGSANORDNUNG ZUM BETRIEB VON OHMSCHEN LEISTUNGSVERBRAUCHERN HOHER LEISTUNG**
CIRCUIT FOR OPERATING HIGH-LOAD OHMIC POWER USERS
MONTAGE ELECTRIQUE POUR ACTIONNER DES DISSIPATEURS OHMIQUES A PUISSANCE ELEVEE

(30) Priorität: 29.09.1989 DE 8911807 U
(43) Veröffentlichungstag der Anmeldung: 08.07.1992
(73) Patentinhaber: Siemens Nixdorf Informationssysteme Aktiengesellschaft, D-33102 Paderborn (DE)
(72) Erfinder: STROMEIER, Jürgen, D-8034 Germering (DE)
(74) Vertreter: Fuchs, Franz-Josef, Dr.-Ing.
(86) Internationale Anmeldenummer: EP9001210
(87) Internationale Veröffentlichungsnummer: WO9105400

(56) Entgegenhaltungen:
- EP-A- 0 111 075
- EP-A- 0 301 544
- WO-A-86/04164
- US-A- 4 017 745
- PATENT ABSTRACTS OF JAPAN vol. 6, no. 243 (E-145)(1121) 2 Dezember 1982, & JP-A-57 142170
- Welding Journal 67 (1988) Febr., No.2; Miami, USA

## Beschreibung

Die Erfindung betrifft eine Schaltungsanordnung zum Betrieb von ohmschen Leistungsverbrauchern hoher Leistung gemäß dem Patentanspruch 1.

Die geregelte, elektrische Versorgung von Gebrauchsgeräten mit einem Leistungsverbrauch von einigen Kilowatt ist eine Aufgabe, die in einer Vielzahl von Anwendungsfällen auf den unterschiedlichsten technischen Gebieten gelöst werden muß. Ein typischer Anwendungsfall ist beispielsweise bei einer elektrofotografischen Druckeinrichtung gegeben, wo in einer Fixierstation die auf einem Aufzeichnungsträger, z. B. Endlos- oder Einzelbaltt-Papier, aufgebrachten Tonerbilder mit Hilfe von Heizelementen fixiert werden. Als Heizelemente wer den dabei vorzugsweise Halogen-Infrarot-Strahler verwendet.

Werden die Heizelemente beispielsweise aus einem Wechselspannungsnetz versorgt, so können Netzspannungsschwankungen dazu führen, daß keine gleichmäßige Strahlungsemission der Heizelemente auftritt. Dieses kann dann dazu führen, daß der Aufzeichnungsträger während des Fixiervorganges infolge einer zu starken Erhitzung beschädigt wird. Bei einem Aufzeichnungsträger aus Papier äußert sich dieses beispielsweise in einer einsetzenden Braunfärbung des Papiers oder bei zu geringer Erwärmung in einer ungenügenden Fixierung.

Eine Möglichkeit, dieses Problem zu umgehen, besteht darin, daß den Heizelementen die elektrische Energie nach dem aus der Literatur "Leistungselektronik-Grundlagen und Anwendungen", R. Jäger, VDE-Verlag GmbH, 1988, Kapitel 4 bekannten Prinzip der Phasenanschnittsteuerung oder der Schwingungspaketsteuerung zugeführt wird. Sowohl durch die Phasenanschnittsteuerung, bei der durch eine nacheilende Phasenverschiebung der Steuerimpulse ein Stromrichter teilausgesteuert und somit als Wechselstromsteller betrieben wird, als auch durch die Schwingungspaketsteuerung, bei der der als Wechselstromsteller betriebene Stromrichter mit einer pulsmodulierten Vollaussteuerung betrieben wird, wird der sich aus dem Verhältnis von Einschaltdauer zu Ausschaltdauer berechnende Leistungsfaktor herabgesetzt. Darüber hinaus läßt sich weder bei der Phasenanschnittsteuerung noch bei der Schwingungspaketsteuerung ein Einschaltstromstoß aufgrund des niedrigen Kaltwiderstandes des Leistungsverbrauchers vermeiden. Bei der Phasenanschnittsteuerung muß zudem noch ein großer Aufwand getrieben werden, um die Störspannungen auf einen zulässigen Pegel zu reduzieren.

Darüber hinaus ist aus der US-A-4,369,354 eine Überwachungsschaltung bekannt, die bei auftretenden Störungen in der Fixierstation einer elektrofotografischen Druckeinrichtung das Fixieren von Tonerbildern auf einer Papierbahn beendet.

Weiterhin sind aus der WO 86/04164 und der US-A-4,017,745 Parallelschaltungen von Bipolar-Transistoren bekannt, die zeitlich verschachtelt geschaltet bzw. in Schaltregler verwendet werden.

In der EP-A2-0 301 544 und der EP-A3-0 111 075 ist jeweils eine Wellenpaketschaltung zur verlustarmen Regelung der Leistung in einem Leistungsverbraucher beschrieben. Als Schaltelement für die Leistungsregelung dient jeweils ein Triac, das von der Wellenpaketschaltung angesteuert wird.

Aus dem Patent Abstracts of Japan, Vol. 6, Nr. 243, 2. Dec. 1982 ist eine Zweipunkt-Regelschaltung bekannt, die den Einschaltstrom während des Aufladens eines Kondensators begrenzt.

Aus der Druckschrift Welding Journal 67 (1988) Febr., No. 2, Seiten 48 bis 50, Miami, FL, USA mit dem Titel: "Plasma Arc Cutting Power Supplies Explained" ist eine getaktete Stromversorgungsschaltung für das Lichtbogenschneiden bekannt, bei der die elektrische Leistung des Lichtbogenschneiders nach einer AC/DC-Netzspannungstransformation und einer anschließenden DC/-Rechteckimpulstransformation durch Ansteuern von Schalttransistoren mit einer hohen Frequenz mit Hilfe einer Pulsweitenmodulation veränderbar ist.

Der Erfindung liegt die Aufgabe zugrunde, eine Schaltungsanordnung zum Betrieb von ohnmschen Leistungsverbrauchern anzugeben, die eine schnelle, genaue und verlustarme Regelung der Leistung des Leistungsverbrauchers auch bei starken Netzspannungsschwankungen ermöglicht und Einschaltstromstöße zuverlässig unterdrückt.

Die Schaltungsanordnung soll insbesondere zum Betrieb an Drehstromnetzen unterschiedlicher Netzspannung geeignet sein.

Diese Aufgabe wird durch die Merkmale des Patentanspruches 1 gelöst.

Vorteilhafte Ausführungsformen der Erfindung sind in den Unteransprüchen angegeben.

Eine Netzausgangsspannung wird an einen Verbraucherstromkreis gelegt und in eine gleichgerichtete Versorgungsspannung umgewandelt. Die Versorgungsspannung wird dann an einen ohmschen Leistungsverbraucher sowie mindestens ein elektronisches Schaltelement gelegt. Als Spannungsnetz werden dabei alternativ ein Drehstromnetz in Dreieckschaltung mit einer Netzausgangsspannung von 400 V und einer Netzfrequenz von 50 Hz nach der Euro-Norm sowie einer Netzausgangsspannung von 208 V und einer Netzfrequenz von 60 Hz nach der US-Norm verwendet.

Der aufgrund des Gleichrichtfaktors höhere Effektivwert der Versorgungsspannung wird dazu genutzt, um auch bei reduzierter Netzausgangsspannung noch über die volle Verbraucherleistung verfügen zu können. Um einen möglichst hohen Gleichrichtfaktor zu erhalten, wird vorzugsweise ein Brückengleichrichter verwendet. Durch die Verwendung eines Brückengleichrichters steht selbst bei Betrieb an der unteren Toleranzgrenze der Netzausgangsspannung nach der Gleichrichtung noch eine genügend hohe Versorgungsspannung für den ohmschen Leistungsverbraucher zur Verfügung. Damit ist es möglich, ohne Änderung einer an das Drehstromnetz angeschlossenen Schaltung, diese jeweils an Drehstromnetzen mit einer unterschiedlichen Netzausgangsspannung, z. B. nach der Euro- bzw. US-Norm zu betreiben.

Mit der Gleichrichtung wird weiterhin erreicht, daß sich der Strom durch den Leistungsverbraucher immer gleichmäßig auf die Phasen des Drehstromnetzes aufteilt. Außerdem ist es von Vorteil, daß aufgrund des Gleichspannungsbetriebs der Verbraucherstrom mit einer Konstantstromquelle geregelt werden kann. Die Konstantstromquelle besteht dabei aus dem elektronischen Schaltelement, das vorzugsweise als Leistungs-Feldeffekttransistor ausgebildet ist und über einen bekannten Steuerschaltkreis in schneller Folge ein- und ausgeschaltet werden kann. Dies ermöglicht eine besonders genaue Regelung.

Der Betrieb des Leistungsverbrauchers mit Gleichstrom an einer Konstantstromquelle vermeidet den Einschaltstromstoß, der bei einer Phasenanschnittsteuerung oder Schwingungspaketsteuerung mindestens während einiger Perioden entsteht. Dies ist insbesondere dann von Vorteil, wenn mit der erfindungsgemäßen Schaltungsanordnung Leistungsverbraucher mit einem niedrigen Kaltwiderstand, z. B. Heizstrahler einer Fixierstation in einer elektrofotografischen Druckeinrichtung betrieben werden. Es ist deshalb nicht notwendig, die Energie-Versorgung, z. B. Trafos, unterbrechungsfreie Stromversorgungen, Notstromversorgungen und die Zuleitungen für die Heizstrahler hinsichtlich der Einschaltstromstöße zu dimensionieren. Die Zuleitungen können deswegen einfacher ausgelegt sein.

In Reihenschaltung zum temperaturabhängigen Leistungsverbraucher (temperaturunabhängiger Innenwiderstand (R)) ist eine Drosselspule mit einer Induktivität (L) angeordnet, die die in der Einschaltphase aufgenommene Energie während der Ausschaltphase über eine zum Leistungsverbraucher und zur Drosselspule parallel geschaltete Freilaufdiode an den Leistungsverbraucher wieder abgibt. Dadurch entstehen keine großen Spannungssprünge am Verbraucher. Im Verbraucherstromzweig liegt weiterhin ein erster Meßwiderstand, der als Shunt ausgebildet ist und mit dem der durch den Leistungsverbraucher fließende Strom gemessen wird. Die daraus resultierende Shuntspannung wird in dem Steuerschaltkreis als Istwert an einen Spannungskomparator gelegt. Erreicht die Shuntspannung einen Wert, der einem ersten bzw. zweitem Schwellenwert entspricht, so wird das elektronische Schaltelement aus- bzw. wieder eingeschaltet.

Neben dem Steuerschaltkreis ist weiterhin noch ein Diagnoseschaltkreis vorgesehen, der bei auftretenden Fehlerfällen im Steuerschaltkreis oder im Verbraucherstromkreis, z. B. dem Ausfall des beispielsweise als Halogen-Infrarot-Strahler ausgebildeten Leistungsverbrauches oder des Schaltelementes, ein Fehlersignal erzeugt, aufgrund dessen der Verbraucherstromkreis vom Drehstromnetz entkoppelt wird.

Zur Steuerung des Aus- bzw. Wiedereinschaltvorganges wird dem Steuerschaltkreis von einer mikroprozessorgesteuerten Anordnung, beispielsweise einem Mikroprozessor oder einem Multiprozessorsystem, ein Sollwert zugeführt. Zur Festlegung des Sollwertes für die Nennbetriebsspannung des Leistungsverbrauchers, z. B. dem Heizstrahler in einer Fixierwalze einer elektrofotografischen Druckeinrichtung, erfaßt die mikroprozessorgesteuerte Anordnung über entsprechende Sensoren, z. B. Temperatursensoren, die Betriebsdaten der Druckeinrichtung und errechnet daraus den Sollwert. Typische Betriebsdaten sind beispielsweise die über einen Temperatursensor erfaßte Temperatur der Fixierstation, die Geschwindigkeit des Aufzeichnungsträgers etc.

Beim Hochheizen der Heizstrahler würde ein sofortiges Anlegen des Sollwertes an den Spannungskomparator wegen der Trägheit der Fixierwalze, in der sich die Heizstrahler befinden, zu einer Temperaturüberschreitung führen. In diesem Fall ist es von Vorteil, wenn die mikroprozessorgesteuerte Anordnung den Sollwert und damit das Betriebsverhalten des Leistungsverbrauchers auch unter Berücksichtigung der Betriebsbedingungen, beispielsweise Einschalten des Leistungsverbrauchers im kalten oder warmen Zustand, Druckpausen korrigiert.

In einer bevorzugten Ausführungsform der Erfindung wird die Schaltungsanordnung für das Fixieren von Tonerbildern auf einem Aufzeichnungsträger, beispielsweise Papier, in einer Fixierstation einer elektrofotografischen Druckeinrichtung verwendet.

Ein Ausführungsbeispiel der Erfindung wird anhand der Zeichnungen erläutert. Es zeigen:
Figur 1 eine prinzipielle, blockschaltbildmäßig dargestellte, erfindungsgemäße Schaltungsanordnung für zwei ohmsche Leistungsverbraucher einer elektrofotografischen Druckeinrichtung,
Figur 2 eine hardwaremäßige Realisierung der Schaltungsanordnung gemäß Figur 1,
Figur 3 einen funktionalen Aufbau der Schaltungsanordnung gemäß Figur 1.

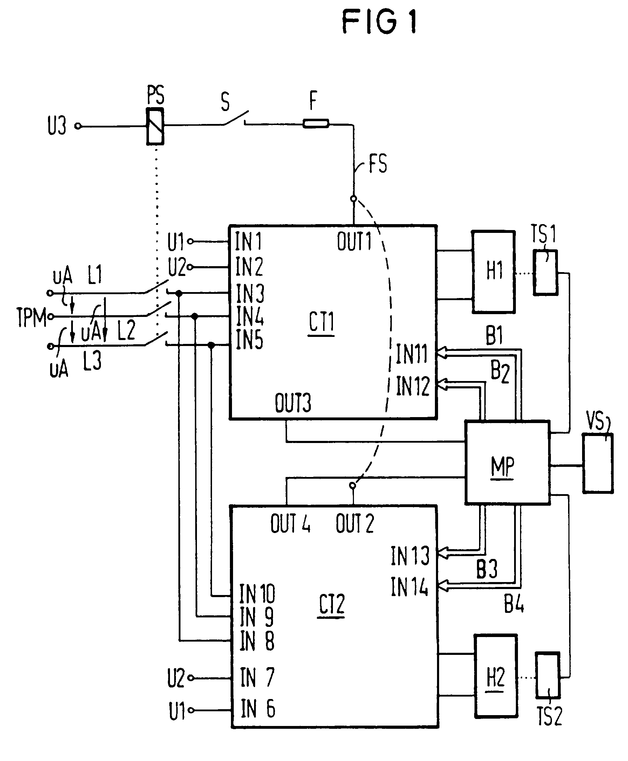

Die Figur 1 zeigt ein Blockschaltbild einer Schaltungsanordnung zur elektrischen Versorgung von zwei ohmschen Leistungsverbrauchern H1, H2. Bei den Leistungsverbrauchern H1, H2 handelt es sich jeweils um ein temperaturabhängiges Heizelement hoher Leistung von etwa 3 kW, bei einer Nennspannung von 230 V, beispielsweise Halogen-Infrarot-Strahlern in einer Fixierwalze, für das Fixieren von Tonerbildern auf einem Aufzeichnungsträger, z. B. Papier, in einer Fixierstation von elektrofotografischen Druckeinrichtungen. Zwei Heizelemente sind deshalb notwendig, weil in Abhängigkeit von der Papierbreite die Fixierwalze unterschiedlich breit beheizt werden muß. Es handelt sich um zwei unabhängig voneinander arbeitende Regelkreise. Darüber hinaus ist es auch möglich, daß die Leistungsverbraucher H1, H2 als Heizwiderstände in Elektrowärmeanlagen und Widerstands-Schweißgeräten eingebaut sind.

Die Leistungsverbraucher H1, H2 sind gemäß der Darstellung in Figur 1 über zwei Schaltungen (circuit) CT1, CT2 an ein Drehstromnetz (Three-Phase Mains) TPM in Dreieckschaltung angeschlossen. Die Schaltung CT1 bzw. CT2 weist dazu drei Eingänge IN3, IN4, IN5 bzw. IN8, IN9, IN10 auf, die über elektrische Leitungen L1, L2, L3 und Leistungsschalter (Power Switch) PS mit dem Drehstromnetz TPM gekoppelt sind. An den Eingängen IN3, IN4, IN5 bzw. IN8, IN9, IN10 ist infolge der Dreieckschaltung des Drehstromnetzes TPM bei geschlossenen Leistungsschaltern PS somit jeweils eine um 120° phasenverschobene Netzausgangsspannung uA wirksam. Die Netzausgangsspannung uA kann stark schwanken und beträgt beispielsweise für ein Netz mit einer Netzfrequenz von 60 Hz nach der US-Norm 208 V und für ein Netz mit einer Netzfrequenz von 50 Hz nach der Euro-Norm 400 V. Die Schaltung CT1, CT2 ist daher so ausgelegt, daß sie ohne zusätzliche Änderungen an Drehstromnetzen mit unterschiedlichen Netzspannungen betrieben werden kann und der Leistungsverbraucher H1, H2 trotzdem automatisch auf eine vorgegebene Nennleistung geregelt wird. Neben der Netzausgangsspannung uA werden die Schaltungen CT1, CT2 an Eingängen IN1, IN6 noch mit einer ersten Gleichspannung U1 von beispielsweise + 12 V, und an Eingängen IN2,IN7 mit einer zweiten Gleichspannung U2, von beispielsweise - 12 V versorgt.

Darüber hinaus ist die Schaltung CT1 an Eingänge IN11, IN12 über Busleitungen B1, B2 und die Schaltung CT2 an Eingänge IN13, IN14 über Busleitungen B3, B4 mit einem Mikroprozessor MP zur Übertragung von Daten verbunden. Alternativ zum Mikroprozessor MP kann aber auch ein Multiprozessorsystem, wie es in der europäischen Patentanmeldung amtl. Aktenzeichen: 89 105 074.2 beschrieben ist, verwendet werden. Sowohl der Mikroprozessor MP als auch das Multiprozessorsystem hat dabei die Aufgabe, anhand von Betriebsdaten der elektrofotografischen Druckeinrichtung einen Sollwert für die Nennbetriebsspannung des Leistungsverbrauchers H1, H2 zu generieren. Hierzu erfaßt der Mikroprozessor MP bzw. das Multiprozessorsystem über geeignete Sensoren, beispielsweise zwei Temperatursensoren (Temperature Sensor) TS1, TS2 und einen Geschwindigkeitssensor (Velocity Sensor) VS, die Temperatur der Fixierwalze mit den Leistungsverbrauchern H1, H2 bzw. die Papiertransportgeschwindigkeit und legt in Abhängigkeit davon die Nennbetriebsspannung des Leistungsverbrauchers H1, H2 fest. Neben den Temperatursensoren TS1, TS2 und dem Geschwindigkeitssensor VS ist der Mikroprozessor MP für eine Spannungsabtastung innerhalb der Schaltung CT1, CT2 über einen Ausgang OUT3 und einen Ausgang OUT4 mit der Schaltung CT1 bzw. der Schaltung CT2 verbunden. Ausgangsseitig sind die Schaltungen CT1, CT2 über Ausgänge OUT1, OUT2, eine Thermosicherung F und einen Schalter S mit einer Spule des Leistungsschalters PS elektrisch gekoppelt. Der Leistungsschalter PS hat die Aufgabe, bei einem von der Schaltung CT1, CT2 über die Ausgänge OUT1, OUT2 gelieferten Fehlersignal FS durch Betätigen der elektrischen Kontakte den phasenverschobenen Stromfluß in den elektrischen Leitungen L1, L2, L3 zwischen dem Drehstromnetz TPM und den Schaltungen CT1, CT2 zu unterbrechen. Hierfür benötigt die Spule des Leistungsschalters PS noch eine Betriebsspannung U3, von beispielsweise 24 V, die dem Leistungsschalter PS separat zugeführt wird. Das Fehlersignal FS wird nur dann von den Schaltungen CT1, CT2 über die Ausgänge OUT1, OUT2 an den Leistungsschalter PS ausgegeben, wenn durch diagnostizierte Fehlerfälle die Qualität der mit Hilfe der Leistungsverbraucher H1, H2 fixierten Tonerbilder beeinflußt wird oder durch defekte Bauteile die Fixierstation bzw. die elektrofotografische Druckeinrichtung gefährdet ist. Ein typischer Fehlerfall ist z. B. der Ausfall des Leistungsverbrauchers H1, H2, ein Stillstand der elektrofotografischen Druckeinrichtung oder ein defektes Schaltelement.

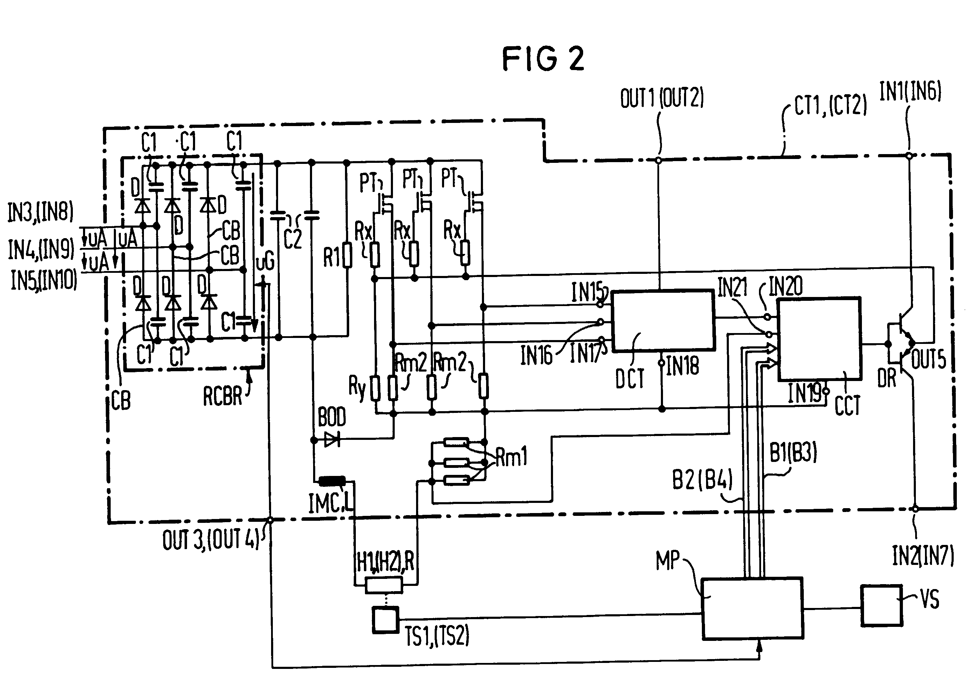

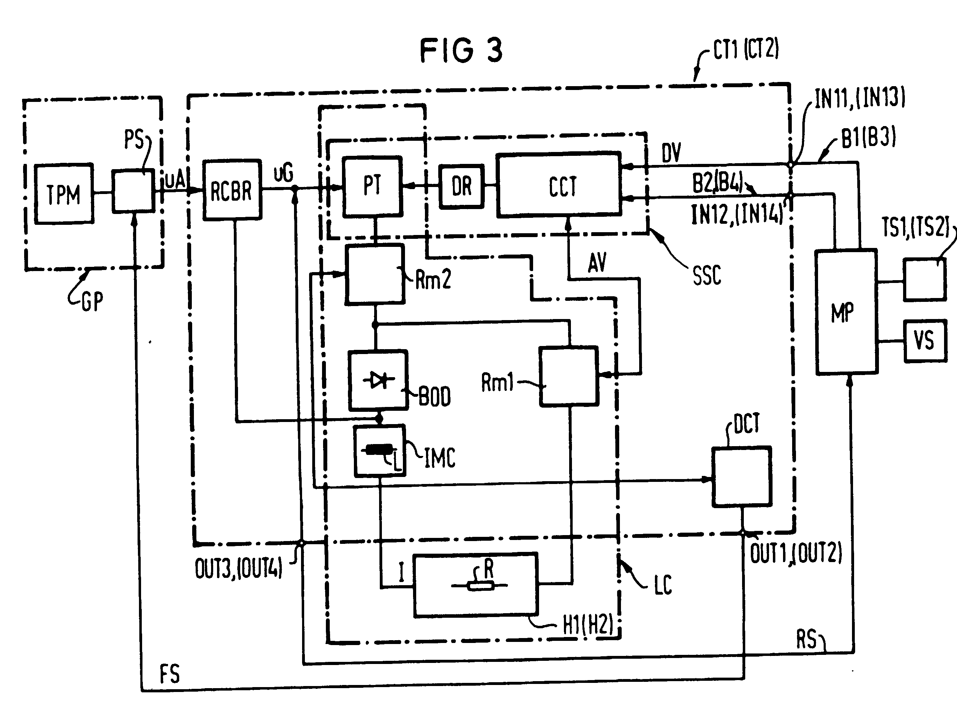

Die Figuren 2 und 3 zeigen die hardwaremäßige Realisierung bzw. den funktionalen Aufbau der Schaltung CT1, (CT2) gemäß Figur 1. Da die Schaltungen CT1, (CT2) sich hierin nicht unterscheiden, gelten die nachfolgenden Ausführungen sowohl für die Schaltung CT1 mit dem Leistungsverbraucher H1 als auch für die Schaltung CT2 mit dem Leistungsverbraucher H2. Um diesen Sachverhalt zu verdeutlichen, sind in Figur 2 und 3 neben den Bezugszeichen für die Schaltung CT2 und den Leistungsverbraucher H2 auch die übrigen, in den Figuren 2 uns 3 verwendeten und zur Schaltung CT2 korrespondierenden Bezugszeichen in Klammern gesetzt.

Die Schaltung CT1, (CT2) in Figur 2 enthält einen Drehstrom-Brückengleichrichter (Rotary Current Bridge Rectifier) RCBR, der über die Eingänge IN3, (IN8), IN4, (IN9), IN5, (IN10) und den Leistungsschaltern PS, nach Figur 1 an das Drehstromnetz TPM angeschlossen ist. Der Drehstrom-Brückengleichrichter RCBR, der beispielsweise vom Typ SKD 25/12 ist, weist sechs Dioden D auf, die jeweils paarweise, symmetrisch zu den elektrischen Leitungen L1, L2, L3, gegenpolig, in parallel geschalteten Stromzweigen (Current Branch) CB des Drehstrom-Brückengleichrichters RCBR angeordnet sind. Darüber hinaus ist parallel zu jeder Diode D ein Kondensator C1 geschaltet, der zusammen mit der Sperrschichtkapazität der Diode D das Schaltverhalten der Diode D bestimmt. Der Kondensator C1 hat vorzugsweise eine Kapazität von 100 nF bei einer Nennspannung von 250 V.

Durch den Drehstrom-Brückengleichrichter RCBR wird die Netzausgangsspannung uA entsprechend eines gleichrichterspezifischen Gleichrichtfaktors in eine gleichgerichtete Versorgungsspannung uG umgewandelt. Der Gleichrichtfaktor berechnet sich aus dem Verhältnis zwischen dem Effektivwert der Versorgungsspannung uG und dem Effektivwert der Netzausgangsspannung uA. Für den Drehstrom-Brückengleichrichter RCBR ergibt sich danach ein Gleichrichtfaktor von 1,35. Aufgrund der Brückengleichrichtung ist ein erhöhter Effektivwert der Versorgungsspannung uG gegenüber der Netzausgangsspannung uA gegeben. Für das Netz nach der US-Norm beträgt der erhöhte Effektivwert 280 V und für das Netz nach der Euro-Norm 540 V. Somit steht selbst für Netzspannungen, deren Effektivwerte an der unteren Toleranzgrenze liegen, auch nach der Gleichrichtung noch eine genügend hohe Spannung zur Verfügung. Bei einer Toleranz von - 15 % ergibt sich für das US-Netz nach der Gleichrichtung immerhin noch ein Spannungswert von 239 V.

Um außerdem die Welligkeit der Versorgungsspannung uG zu reduzieren, sind parallel zum Drehstrom-Brückengleichrichter RCBR in einer Parallelschaltung zwei Glättungskondensatoren C2 geschaltet. Jeder dieser Glättungskondensatoren G2 hat vorzugsweise eine Kapazität von 680 µF bei einer Nennspannung von 600 V. Wiederum parallel zu den Glättungskondensatoren G2 liegt weiterhin ein Widerstand R1, über den sich die Glättungskondensatoren C2 nach dem Entkoppeln der Schaltungen CT1, (CT2) von dem Drehstromnetz TPM entladen.

Die Schaltung CT1, (CT2) weist außerdem jeweils drei parallel geschaltete Leistungstransistoren, beispielsweise drei n-Kanal MOS FET's (Metall Oxide Semiconductor Field Effect Transistors), die über deren Drain-Anschluß mit dem Drehstrom-Brückengleichrichter RCBR, den Glättungskondensatoren C2 und dem Widerstand R1 äquipotentialmäßig verbunden sind. Als Alternative zur Verwendung von Leistungs-Feldeffekttransistoren können auch entsprechende Bipolartransistoren eingesetzt werden, die jedoch eine größere Ansteuerleistung benötigen. Darüber hinaus ist es aber auch möglich, statt der drei Feldeffekttransistoren ein einzelnes Transistor-Modul oder einen Bipolartransistor mit isolierter Steuerelektrode (IGBT = Insulated Gate Bipolar Transistor) zu verwenden.

Der Source-Anschluß der Leistungstransistoren PT ist gleichzeitig mit Eingängen IN15, IN16, IN17 eines Diagnoseschaltkreises (Diagnostic Circuitry) DCT und über einen Meßwiderstand Rm2 mit einem weiteren Eingang IN18 des Diagnoseschaltkreises DCT sowie mit einem Eingang IN19 eines Steuerschaltkreises (Control Circuitry) CCT verbunden. Während der Steuerschaltkreis CCT zusammen mit dem Mikroprozessor MP den elektronischen Schaltelementen PT und der Treiberstufe DR die Leistungsabgabe der Leistungsverbraucher H1, H2 regelt, schaltet der Diagnoseschaltkreis DCT eine Sicherheits-Abschaltvorrichtung, bestehend aus der Thermosicherung F, dem Schalter S, dem Leistungsschalter PS und der Betriebsspannung U3, die Schaltung CT1, (CT2) von dem Drehstromnetz TPM bei auftretenden Fehlerfällen innerhalb der Schaltung CT1, (CT2) ab. Der Diagnoseschaltkreis DCT ist außerdem ausgangsseitig mit dem Steuerschaltkreis CCT an einen Eingang IN20 verbunden. Sowohl der Diagnoseschaltkreis DCT als auch der Steuerschaltkreis CCT sind bekannte Schaltkreise, die beispielsweise aus der Literatur - "Halbleiterschaltungstechnik" U. Tietze, Ch. Schenk; Springer Verlag 1989 - entnommen werden können.

Der Gate-Anschluß der Leistungstransistoren PT ist über Vorwiderstände Rx mit einem Ausgang OUT5 einer Treiberstufe DR und über eine Serienschaltung des Vorwiderstandes Rx mit einem Widerstand Ry mit dem Eingang IN18 des Diagnoseschaltkreises DCT und dem Eingang IN19 des Steuerschaltkreises CCT verbunden. Bei der Treiberstufe DR handelt es sich um je einen n- und p-Kanal Bipolartransistor, deren Basis-Anschlüsse mit einem Ausgang OUT4 des Steuerschaltkreises CCT verbunden sind, deren Emitter-Anschlüsse im Ausgang OUT5 zusammengelegt sind und deren Kollektor-Anschlüsse, im Fall des p-Kanal Transistors, über den Eingang IN2, (IN7) mit der Gleichspannung U2 sowie, im Fall des n-Kanal Transistors, über den Eingang IN1, (IN6), mit der Gleichspannung U1 versorgt werden.

Zwischen dem Minus-Pol des Drehstrom-Brückengleichrichter RCBR, den Glättungskondensatoren C2, dem Widerstand R1 und dem Eingang IN18 des Diagnoseschaltkreises DCT sowie dem Eingang IN19 des Steuerschaltkreises CCT sind eine Freilaufdiode (By-pass Opening Diode) BOD vom Typ BYV 29/500 und zu dieser parallel in Serienschaltung drei weitere zueinander parallel geschaltete Meßwiderstände Rm1, der temperaturabhängige Leistungsverbraucher H1, (H2) mit einem temperaturabhängigen Innenwiderstand (R) und eine Drosselspule (Impedance Coil) IMC mit einer Induktivität (L) und den Kennwerten 500 µH/14A angeordnet. Die Freilaufdiode BOD ist dafür vorgesehen, daß die Drosselspule IMC die während der Einschaltphase der Leistungsverbraucher H1, (H2) aufgenommene Energie an diesen während der Ausschaltphase wieder abgibt. Bei den Meßwiderständen Rm1 handelt es sich um Nebenwiderstände (Shunts) mit beispielsweise je einem Widerstandswert von 0,13 Ohm. Die Anzahl der Meßwiderstände Rm1 und auch der jeweilige Widerstandswert sind an die Schaltungskonfiguration angepaßt, die durch die Verwendung bestimmter Bauteile vorgegeben ist. Es ist somit ein Verbraucherstromkreis LC entstanden (Figur 3), der die Leistungstransistoren PT, die Meßwiderstände Rm1, Rm2, die Drosselspule IMC, die Freilaufdiode BOD sowie den Leistungsverbraucher H1, (H2) enthält.

Die Figur 3 zeigt den funktionellen Aufbau der Schaltung CT1, (CT2) im Zusammenwirken mit dem Mikroprozessor MP, den Leistungsverbrauchern H1, (H2) und einer Stromversorgungsanlage (Generating Plant) GP, bestehend aus dem Drehstromnetz TPM und dem Leistungsschalter PS.

Die von der Stromversorgungsanlage GP gelieferte Netzausgangsspannung uA wird von dem Drehstrom-Brückengleichrichter RCBR in die Versorgungsspannung uG umgeformt, die an den Verbraucherstromkreis (Load Circuit) LC gelegt wird. Die Leistungstransistoren PT bilden zusammen mit der Treiberstufe DR und dem Steuerschaltkreis CCT eine Konstantstromquelle (Stabilized Source of Current) SSC. Die Konstantstromquelle SSC hat die Aufgabe, einen durch die Versorgungsspannung uG in dem Verbraucherstromkreis LC eingeprägten Strom I zu regeln. Die Leistungstransistoren PT werden dazu von dem Steuerschaltkreis CCT über die Treiberstufe DR in schneller Folge, mit einer Schaltfrequenz, die im kHz-Bereich liegt, ein-und ausgeschaltet. Das Ein- und Ausschalten der Leistungstransistoren PT erfolgt dann, wenn beim Anlegen eines Istwertes AV und Sollwertes DV an einen Spannungskomparator im Steuerschaltkreis CCT ein unterer bzw. oberer Schwellenwert erreicht wird. Der Abstand der Schwellenwerte vom Sollwert DV ist dabei von der Hysterese des Spannungskomparators abhängig. Durch Verändern des Sollwertes DV läßt sich somit der Schaltvorgang für die Leistungstransistoren PT steuern. Der dem Steuerschaltkreis CCT zugeführte Istwert AV wird dadurch gewonnen, daß der in dem Verbraucherstromkreis LC fließende Strom I über den Meßwiderstand (Shunt) Rm1 gemessen und in eine Meßspannung umgewandelt wird, die an einen Eingang IN21 des Steuerschaltkreises CCT gelegt wird. Der Sollwert DV wird in dem Mikroprozessor MP, beispielsweise in Abhängigkeit von über den Temperatursensor TS1, (TS2) der Geschwindigkeit erfaßten Betriebsparametern der elektrofotografischen Druckeinrichtung bestimmt und dem Steuerschaltkreis CCT zugeführt. Um eine hinreichend gute Regelung des Stroms I in bezug auf niederfrequente Brummschwankungen der Versorgungsspannung uG zu erreichen, kann der Sollwert DV mit Hilfe eines Referenzsignales RS in Abhängigkeit von der Versorgungsspannung uG korrigert werden. Die Versorgungsspannung uG weist einen Brummanteil von 300 Hz (Euro-Netz) und 360 Hz (US-Netz) auf, während die Schaltfrequenz der Leistungstransistoren PT im kHz-Bereich liegt. Die Korrektur des Sollwertes DV ist dabei umgekehrt proportional zur Abweichung der Versorgungsspannung uG. Bei erhöhter Versorgungsspannung uG wird der Sollwert DV erniedrigt und umgekehrt.

Eine Korrektur des Sollwertes ist z. B. auch dann notwendig, wenn bei Betriebsbeginn die Leistungsverbraucher H1, (H2) hochgeheizt werden. Ein unmittelbares Anlegen des Sollwertes DV in Form der Nennbetriebsspannung würde wegen der Trägheit der Fixierwalze, in der sich die Leistungsverbraucher H1, (H2) befinden, zu Temperaturüberschreitungen führen.

Neben dem Zuführen des Sollwertes DV über die Busleitungen B1, (B3) wird über die Busleitungen B2, (B4) ein Einschalt- bzw. Ausschaltsignal von dem Mikroprozessor MP an den Steuerschaltkreis CCT abgegeben. Darüber hinaus wird durch den Diagnoseschaltkreis DCT, der den aktuellen Wert des Stroms I durch den Verbraucherstromkreis U über den Meßwiderstand Rm2 ermittelt, das Fehlersignal FS erzeugt. Mit Hilfe des Fehlersignales FS wird bei auftretenden Fehlerfällen in dem Verbraucherstromkreis LC oder im Diagnoseschaltkreis DCT, die Schaltung CT1, (CT2) von dem Drehstromnetz TPM über den Leistungsschalter PS entkoppelt.

## Patentansprüche

1. Schaltungsanordnung mit ohmschen Leistungsverbrauchern (H1, H2) hoher Leistung, die einen temperaturabhängigen Innenwiderstand (R) aufweisen und die an einer oberhalb eines vorgegebenen Grenzwertes variierenden Wechselspannung (uA) einer mehrphasigen Wechselstromquelle (TPM) betrieben werden, mit folgenden Merkmalen:
a) einem Gleichrichter (RCBR) zur Umwandlung der mehrphasigen Wechselspannung (uA) entsprechend einem gleichrichterspezifischen Gleichrichtfaktor in eine gleichgerichtete Versorgungsspannung (uG) derart, daß die Versorgungsspannung (uG) einen den vorgegebenen Grenzwert überschreitenden Effektivwert aufweist,
b) einer als Konstantstromquelle (SSC) ausgebildeten Zweipunkt-Regelanordnung mit einem durch Steuerungsmittel (CCT, DR) über elektronische Schaltelemente (PT) ein- und ausschaltbaren, die Leistungsverbraucher (H1, H2) enthaltenden Leistungsverbraucherstromkreis (LC), die einen über die Versorgungsspannung (uG) in die Leistungsverbraucher (H1, H2) eingeprägten Strom (I) derart regelt, daß in Abhängigkeit von einem Vergleich zwischen einem Sollwert (DV) und einem den Strom (I) repräsentierenden Istwert (AV)
b1) in einem Einschaltzyklus des Leistungsverbraucherstromkreises (LC), wenn der Istwert (AV) einen ersten, steuerungsmittelabhängigen Schwellenwert des Sollwertes (DV) unterschreitet, die Leistungsverbraucher (H1, H2) von der Versorgungsspannung (uG) versorgt werden und eine der Versorgungsspannung (uG) proportionale Energie in einer Induktivität (IMC) des Leistungsverbraucherstromkreises (LC) gespeichert wird,
b2) in einem Ausschaltzyklus des Leistungsverbraucherstromkreises (LC), wenn der Istwert (AV) einen zweiten, steuerungsmittelabhängigen Schwellenwert des Sollwertes (DV) überschreitet, die Leistungsverbraucher (H1, H2) von der in der Induktivität (IMC) gespeicherten Energie über einen Freilaufzweig (BOD) versorgt werden.

2. Schaltungsanordnung nach Anspruch 1, **dadurch gekennzeichnet**, daß eine den Sollwert (DV) in Abhängigkeit von Betriebsdaten eines den Leistungsverbraucher enthaltenden Gerätes festlegende Steuereinheit (MP) vorgesehen ist.

3. Schaltungsanordnung nach Anspruch 2, **dadurch gekennzeichnet**, daß die Steuereinheit (MP) die Versorgungsspannung (uG) erfaßt und bedarfsweise in Abhängigkeit von dieser Versorgungsspannung (uG) den Sollwert (DV) korrigiert.

4. Schaltungsanordnung nach Anspruch 1, **dadurch gekennzeichnet**, daß die elektronischen Schaltmittel (PT) als Leistungs-Feldeffekttransistor ausgebildet sind.

5. Schaltungsanordnung nach Anspruch 1, **dadurch gekennzeichnet**, daß die elektronischen Schaltmittel (PT) als Bipolartransistor mit isolierter Steuerelektrode ausgebildet sind.

6. Schaltungsanordnung nach Anspruch 1, **dadurch gekennzeichnet**, daß der Freilaufzweig (BOD) eine Freilaufdiode enthält.

7. Schaltungsanordnung nach Anspruch 1, **dadurch** **gekennzeichnet**, daß ein Diagnoseschaltkreis (DCT) zur Überwachung des Stroms (I) durch den Leistungsverbraucher (H1, H2) vorgesehen ist.

8. Schaltungsanordnung nach Anspruch 7, **dadurch gekennzeichnet** , daß der Diagnoseschaltkreis (DCT) mit einer Sicherheits-Abschaltvorrichtung (PS, S, F, U3) für das Entkoppeln der Schaltung (CT1, CT2) von dem Drehstromnetz (TPM) verbunden ist.

9. Schaltungsanordnung nach Anspruch 1, **dadurch gekennzeichnet**, daß der Gleichrichter (RCBR) als Drehstrom-Brückengleichrichter ausgebildet ist.

10. Schaltungsanordnung nach Anspruch 1, **dadurch gekennzeichnet**, daß der Leistungsverbraucher (H1, H2) als Heizelement mit dem temperaturabhängigen Innenwiderstand (R) in einer Fixierwalze zum Fixieren von Tonerbildern auf Aufzeichnungsträger in einer Fixierstation von elektrofotografischen Druckeinrichtungen ausgebildet ist.

## Claims

1. Circuit arrangement with high-power resistive power loads (H1, H2) which have a temperature-dependent internal resistance (R) and which are operated on an AC voltage (uA), which varies above a predetermined limit value, of a multiphase AC power source (TPM), having the following features:
a) a rectifier (RCBR) for conversion of the multiphase AC voltage (uA) in accordance with a rectifier-specific rectification factor into a rectified supply voltage (uG) in such a manner that the supply voltage (uG) has a root mean square value which exceeds the predetermined limit value,
b) a two-point control arrangement which is designed as constant-current source (SSC) and has a power load circuit (LC) which contains the power loads (H1, H2) and can be switched on and off by control means (CCT, DR) via electronic switching elements (PT) and regulates a current (I), which is forced to flow into the power loads (H1, H2) via the supply voltage (uG), in such a manner that, as a function of a comparison between a required value (DV) and an actual value (AV) which represents the current (I),
b1) the power loads (H1, H2) are supplied from the supply voltage (uG) in a switching-on cycle of the power load circuit (LC) when the actual value (AV) is less than a first threshold value, which is dependent on the control means, of the required value (DV), and an amount of energy which is proportional to the supply voltage (uG) is stored in an inductance (IMC) of the power load circuit (LC),
b2) the power loads (H1, H2) are supplied via a free-wheeling path (BOD) from the energy which is stored in the inductance (IMC) in a switching-off cycle of the power load circuit (LC) when the actual value (AV) is greater than a second threshold value, which is dependent on the control means, of the required value (DV).

2. Circuit arrangement according to Claim 1, characterized in that a control unit (MP) is provided which defines the required value (DV) as a function of operating data of a device which contains the power load.

3. Circuit arrangement according to Claim 2, characterized in that the control unit (MP) detects the supply voltage (uG) and corrects the required value (DV) as required as a function of this supply voltage (uG).

4. Circuit arrangement according to Claim 1, characterized in that the electronic switching means (PT) are designed as a power field-effect transistor.

5. Circuit arrangement according to Claim 1, characterized in that the electronic switching means (PT) are designed as bipolar transistor having an insulated control electrode.

6. Circuit arrangement according to Claim 1, characterized in that the freewheeling path (BOD) contains a freewheeling diode.

7. Circuit arrangement according to Claim 1, characterized in that a diagnosis circuit (DCT) is provided for monitoring the current (I) through the power load (H1, H2).

8. Circuit arrangement according to Claim 7, characterized in that the diagnosis circuit (DCT) is connected to a safety turn-off device (PS, S, F, U3) for decoupling the circuit (CT1, CT2) from the three-phase mains power supply (TPM).

9. Circuit arrangement according to Claim 1, characterized in that the rectifier (RCBR) is designed as three-phase bridge rectifier.

10. Circuit arrangement according to Claim 1, characterized in that the power load (H1, H2) is designed as a heating element having the temperature-dependent internal resistance (R) in a fixing roller for fixing toner images on recording media in a fixing station of electrophotographic printing devices.

## Revendications

1. Montage de dissipateurs ohmiques (H1, H2) de grande puissance, qui comporte une résistance interne (R) dépendant de la température et qui fonctionne à une tension alternative (uA), variant au-dessus d'une valeur limite prescrite, d'une source de courant alternatif polyphasé (TPM), ayant les caractéristiques suivantes :
a) un redresseur (RCBR) destiné à la transformation de la tension alternative (uA) polyphasée, en fonction d'un facteur de redressement spécifique au redresseur, en une tension d'alimentation redressée (uG), de sorte que la tension d'alimentation (uG) ait une valeur efficace supérieure à la valeur limite prescrite,
b) un régulateur par tout ou rien sous forme d'une source de courant constant (SSC), comportant un circuit de dissipateurs (LC), qui peut être connecté ou déconnecté par des moyens de commande (CCT, DR) par l'intermédiaire de moyens électroniques de commutation (PT) qui comprend les dissipateurs (H1, H2) et qui régule un courant (I), introduit par l'intermédiaire de la tension d'alimentation (uG) dans les dissipateurs (H1, H2), de telle sorte que, en fonction d'une comparaison entre une valeur de consigne (DV) et une valeur réelle (AV) représentant le courant (I),
b1) dans un cycle de connexion du circuit de dissipateurs (LC), lorsque la valeur réelle (AV) devient inférieure à une première valeur de seuil, dépendant des moyens de commande, de la valeur de consigne (DV), les dissipateurs (H1, H2) soient alimentés par la tension d'alimentation (uG) et une énergie proportionnelle à la tension d'alimentation (uG) soit emmagasinée dans une inductance (IMC) du circuit de dissipateurs (LC),
b2) dans un cycle de déconnexion du circuit de dissipateurs (LC), lorsque la valeur réelle (AV) devient supérieure à une deuxième valeur de seuil, dépendant des moyens de commande, de la valeur de consigne (DV), les dissipateurs (H1, H2) soient alimentés par l'énergie emmagasinée dans l'inductance (IMC) par l'intermédiaire d'une branche de roue libre (BOD).

2. Montage suivant la revendication 1, caractérisé par le fait qu'il est prévu une unité de commande (MP) qui fixe la valeur de consigne (DV) en fonction de données de fonctionnement d'un appareil comprenant le dissipateur.

3. Montage suivant la revendication 2, caractérisé par le fait que l'unité de commande (MP) détecte la tension d'alimentation (uG) et corrige si nécessaire la valeur de consigne (DV) en fonction de cette tension d'alimentation (uG).

4. Montage suivant la revendication 1, caractérisé par le fait que les moyens électroniques de commutation (PT) sont sous forme de transistors de puissance à effet de champ.

5. Montage suivant la revendication 1, caractérisé par le fait que les moyens (PT) électroniques de commutation sont sous la forme de transistors bipolaires à électrode de commande isolée.

6. Montage suivant la revendication 1, caractérisé par le fait que la branche de roue libre (BOD) comprend une diode de roue libre.

7. Montage suivant la revendication 1, caractérisé par le fait qu'il est prévu un circuit de diagnostic (DCT) destiné au contrôle du courant (I) traversant le dissipateur (H1, H2).

8. Montage suivant la revendication 7, caractérisé par le fait que le circuit de diagnostic (DCT) est relié à un dispositif de mise hors circuit par sécurité (PS, S, F, U3) pour découpler du réseau triphasé (TPM) le circuit (CT1, CT2).

9. Montage suivant la revendication 1, caractérisé par le fait que le redresseur (RCBR) est sous forme de redresseur en pont de courant triphasé.

10. Montage suivant la revendication 1, caractérisé par le fait que le dissipateur (H1, H2) est sous forme d'un élément de chauffage, comportant la résistance interne (R) dépendant de la température, dans un rouleau de fixage destiné à fixer des images de toner sur un support d'enregistrement dans un poste de fixage d'installations électro-photographiques d'impression.
